**Europäisches Patentamt**

**European Patent Office**

**Office européen des brevets**

(11) Publication number: **0 073 518**
**B1**

# EUROPEAN PATENT SPECIFICATION

(45) Date of publication of patent specification: **17.01.90**

(51) Int. Cl.⁵: **F 02 D 41/40,** F 02 D 41/36

(21) Application number: **82108006.6**

(22) Date of filing: **31.08.82**

(54) **Apparatus for controlling the number of operative cylinders of a diesel engine.**

(30) Priority: **02.09.81 JP 138845/81**

(43) Date of publication of application:
**09.03.83 Bulletin 83/10**

(45) Publication of the grant of the patent:
**17.01.90 Bulletin 90/03**

(84) Designated Contracting States:
**DE FR GB**

(56) References cited:
**EP-A-0 027 865**
**US-A-3 896 779**
**US-A-3 996 915**
**US-A-4 107 921**
**US-A-4 176 627**
**US-A-4 276 863**

(73) Proprietor: **Hitachi, Ltd.**
**5-1, Marunouchi 1-chome**
**Chiyoda-ku Tokyo 100 (JP)**

(73) Proprietor: **Hitachi Automotive Engineering Co.,**
**Ltd.**
**2520, Oaza Takaba**
**Katsuta-shi Ibaraki-ken (JP)**

(72) Inventor: **Sano, Yukinori**
**23-1, Ishikawacho**
**Katsuta-shi (JP)**
Inventor: **Hoshi, Yoshikazu**
**2650-62, Oaza Muramatsu Tokaimura**
**Naka-gun Ibaraki-ken (JP)**
Inventor: **Takahashi, Ikuo**
**1034, Higashiishikawa**
**Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The present invention relates to an apparatus for controlling the number of operative cylinders of Diesel engines as defined in the preamble of claim 1.

In the past, the amount of fuel supplied by a distribution type fuel injection pump has been controlled collectively with respect to all the cylinders, and it has also been impossible for electronically controlled fuel injection pumps to control the fuel injection quantity separately for each of the cylinders. Further, regarding the control of the number of the operative cylinders, various methods have been used with gasoline automobiles for example the method of simultaneously closing the intake and exhaust valves by solenoids and stopping the operation of the cylinders, and the exhaust recirculation method in which fuel cut-off and ignition interruption are effected on the cylinders to be stopped, and the exhaust gases from the operating cylinders are circulated to the stopped cylinders.

In the case of the Diesel engines, however, the electronically operated distribution type fuel injection pumps heretofore known in the art have not been suitable for controlling the number of enabled cylinders, and none of these known pumps has been capable of positively cutting off the fuel supply to selected ones of the cylinders.

US—A—3 896 779 discloses a fuel injection pump for multiple-cylinder Diesel engines comprising an electro-magnetic valve in a passage leading to an intake port or to an outlet port of the pump and a controller connected to the valve to control opening time and opening period of the valve, thereby reducing the number of operative cylinders when the engine is in idling conditions. This system is not a microcomputer system but an analog device, and does not detect a deceleration state of the engine, but idling conditions, under which the number of operative cylinders is reduced to one half of the total number.

US—A—4 107 921 discloses an engine control system comprising cylinder cut-off control means reponsive to the engine speed and the engine load detected via the throttle valve opening degree or the vacuum in the intake manifold. This system is not specifically based on the detection of a deceleration state.

US—A—4 176 627 relates to an electronic control system for injection-type internal combustion engines which comprises a memory wherein predetermined models of fuel injection intermittency are stored in the form of pulse sequences for covering the whole range of operational conditions of the engine, from maximum throttling to full power, which are read out in dependence of the power demand of the driver. A fuel-cut based on the number of cylinders under deceleration conditions is not mentioned in this document.

It is the object of the present invetnion to provide an apparatus which controls the number of operative cylinders or Diesel engines in accordance with engine deceleration conditions. This object is achieved according to claim 1. The dependent claims relate to preferred embodiments.

The apparatus for controlling the number of operative cylinders of Diesel engines comprises
a control circuit responsive to a plurality of engine parameters and determining the fuel supply quantity;
engine rotational speed detecting means generating rotation synchronous pulses;
a fuel control pulse generating circuit responsive to the engine speed detected by the engine rotational speed detecting means and generating fuel control pulses;
fuel injection means comprising a fuel metering valve responsive to the fuel control pulses of the fuel control pulse genrating circuit and distributing the fuel to the cylinders;
means for deteecting deceleration;
means providing an information corresponding to the number of operative cylinders as a function of at least the engine speed, and
a cylinder control circuit determining the number of operative cylinders in accordance with the information issued from the means and controlling when deceleration has been detected the number of operative cylinders in accordance with the engine speed by accordingly controlling the fuel metering valve,
and is characterized in that
the engine rotational speed detecting means include a crank angle sensor,
the fuel injection means include a fuel injection pump for compressing and distributing the fuel metered by the fuel metering valve to the cylinders,
an accelerator position sensor is provided which delivers oiutput signals corresponding to the power requested by the driver,
the means are memory means storing the number of operative cylinders as a function of the engine speed and the accelerator position in the form of a map, and
the cylinder control circuit controls the fuel metering valve on the basis of the map stored in the memory means during deceleration, whereas all the cylinders are operated when no deceleration has been detected.

In this way, the desired control is effected efficiently in accordance with the engine operating conditions.

A system for controlling the number of enabled cylinders of an internal combustion engine during deceleration was known from US—A—42 76 863. This prior art is acknowledged in the preamble of claim 1. The system is not microcomputer-controlled, and effects a stepwise cylinder cut-off under deceleration conditions in accordance with a predetermined pattern as may be seen from Figs. 5 and 6 of this document.

The present invention will become more apparent from the following description of embodiments with reference to the accompanying drawings, where:

Fig. 1 is a block diagram showing the basic construction of an embodiment of the control apparatus according to the invention;

Fig. 2 a timing chart for explaining the operation of the apparatus of Fig. 1;

Fig. 3 a circuit diagram showing a detailed circuit construction of the cylinder control circuit shown in Fig. 1;

Fig. 4 a timing chart for explaining the oepration of the circuit of Fig. 3;

Fig. 5 a circuit diagram showing a detailed circuit construction of the INT pulse generating circuit and the injection pulse generating circut of Fig. 1;

Fig. 6 a timing chart for explaining the operation of the INT pulse generating circuit and the INJ pulse generating circuit;

Fig. 7 a vertical sectional view of the fuel metering valve shown in Fig. 1;

Fig. 8 a sectional view taken along the line IX—IX of Fig. 7;

Fig. 9 a sectional view taken along the line X—X of Fig. 7;

Fig. 10 a sectional view taken along the line XI—XI of Fig. 7;

Fig. 11 a sectional view taken along the line VIII—VIII of Fig. 7;

Fig. 12 a sectional view taken along the line XII—XII of Fig. 7;

Fig. 13 is a flow chart for computing the cylinder number control data; and

Fig. 14 is a flow chart for computing the injection data INJ.

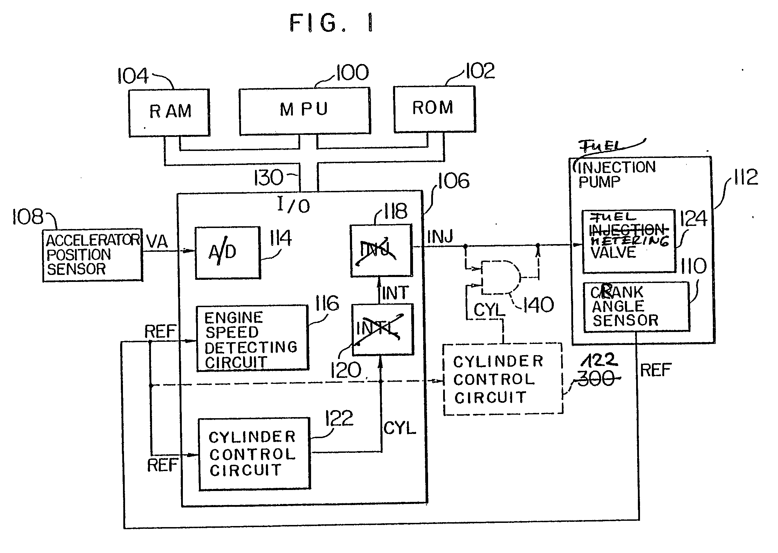

In Fig. 1 showing in block diagram form the basic construction of a contorl apparatus according to the invention, the control apparatus comprises a microprocessor (MPU) 100, a read-only memory ROM 102, a random-access memory RAM 104, an input/output circuit (I/O) 106 (e.g., Hitachi HD 46506), an accelerator position sensor 108 a crank angle sensor 110 and fuel injection means (fuel injection pump) 112. The input/output circuit 106 comprises an analog-to-digital converter (A/D) 114, an engine speed detecting circuit 116, a cylinder control circuit 122, an interval (INT) pulse generating circuit 120 and a fuel injection pulse generating circuit 118. The accelerator position sensor 108 comprises for example a potentiometer which generates an analog voltage VA corresponding to the accelerator position. The analog voltage VA is converted into a digital accelerator position signal θAC by the A/D converter 114, supplied to the microprocessor 100 and stored in the RAM 104.

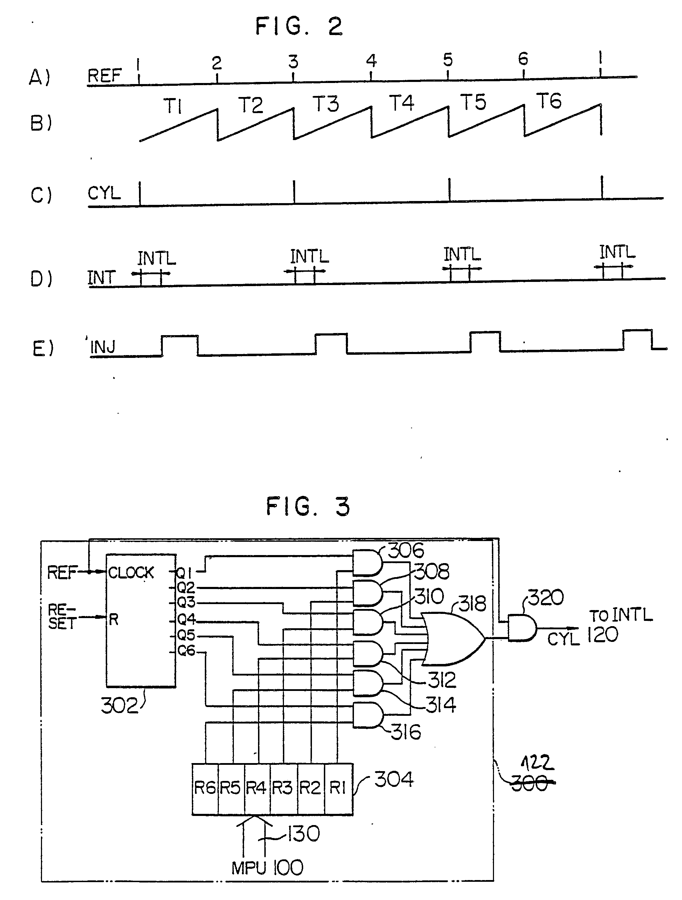

The injection pump 112 includes a fuel metering valve 124 and a crank angle sensor 110 for generating cylinder cycle indicative pulses REF in synchronism with the rotation of the engine shaft, and the pulses shown in (A) of Fig. 2 are generated in correspondence to the numbers 1 to 6 of the cylinders. The pulses REF are applied to the engine speed detecting circuit 116 which counts clock pulses by a counter so that the periods $T_1$ to $T_6$ of the respective cylinder pulses are detected, and the period T is applied to the microprocessor MPU 100. The period T is the reciprocal of the engine speed N and the MPU 100 computes the engine speed N from the period T and stores it in the RAM 104.

In response to the accelerator position signal θAC and the engine speed N, the MPU 100 computes the desired fuel supply quantity and cylinder control data in accordance with the various programs stored in the ROM 102, and the results are respectively set in the fuel injection pulse generating circuit 118 and the cylinder control circuit 122. Also, a constant value INTL is set in the INT pulse generating circuit 120. The RAM 104 is used for storing the working data required for these computations. The transmission of the various data between the MPU 100, the ROM 102, the RAM 104 and the input/output circuit 106 is effected through a bus 130 including a data bus and an address bus.

Fig. 2 is a timing chart for explaining the operation of the blocks shown in Fig. 1; the cylinder control circuit 122 is responsive to the pulse REF shown in A) to generate the pulse CYL shown in C). The pulse CYL is generated in response to the pulse REF in A), and which of the REF pulses 1 to 6 corresponds to the CYL pulse is determined in accordance with the cylinder control data set in the cylinder control circuit 122. In the illustration of Fig. 2, the CYL pulses are generated in correspondence to the REF pulses 1, 3 and 5. This means that only three cylinders of the six-cylinder engine, i.e., the Nos. 1, 3 and 5 cylinders are used to operate the engine, and the operation of the remaining Nos. 2, 4 and 6 cylinders is stopped. The CYL pulse is applied to the INT pulse generating circuit 120 thereby generating a pulse INT which is shifted from the CYL pulse by a given amount INTL. This INT pulse is applied as a trigger pulse to the injection pulse generating circuit 118 which in turn generates an INJ pulse for operating the fuel metering valve 124. In other words, the cylinder control circuit 122 controls the corresponding relation between the REF pulses and the CYL pulses thereby controlling the number of the operative cylinders of the engine.

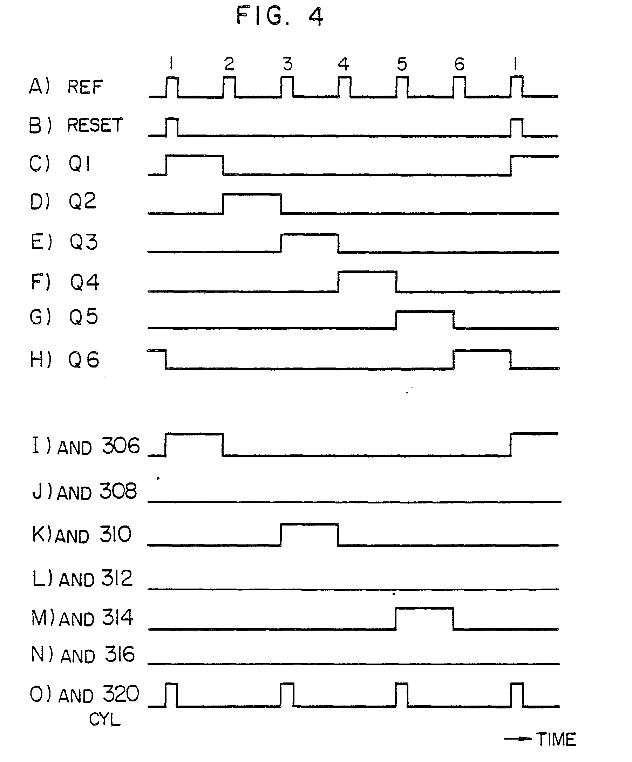

Fig. 3 shows a detailed circuit construction of the cylinder control circuit 122 of Fig. 1. It comprises a ring counter 302, a register 304, AND gates 306, 308, 310, 312, 314 and 316, an OR gate 318 and an AND gate 320. The REF pulses applied to the ring counter 302 are cylinder pulses so that for a six-cylinder Diesel engine six pulses are generated at intervals of an equal angle for every two revolutions of the engine shaft as shown in A) of Fig. 2. The ring counter 302 counts the REF pulses to generate pulses $Q_1$ to $Q_6$. Shown in A) of Fig. 4 are the REF pulses shown in A) of Fig. 2, and the REF pulses 1 to 6 are generated in synchronism with the Nos. 1 to 6 cylinders of the Diesel engine. In response to the REF pulses 1 to 6, the $Q_1$ to $Q_6$ pulses shown respectively in C) to H) of Fig. 4 are generated from the ring counter 302 and are applied to the AND gates 306, 308, 310, 312, 314 and 316, respectively.

Shown in B) of Fig. 4 is a signal for resetting the ring counter 302 which is reset by an REF pulse indicative of the No. 1 cylinder. In fact, however, the number of shift stages of the ring counter 302 corresponds to the number of engine cylinders so that once the ring counter 302 is reset at the beginning, it operates properly, and there is no need to particularly reset it repeatedly. In accordacne with this embodiment, the ring counter 302 is reset each time so as to prevent any erroneous operation due to noise.

On the other hand, the cylinder control data computed by the MPU 100 are applied to the bits R1 to R6 of the register 304 through the bus 130. Assuming now that the cylinder control data is 101010, the data 101010 is stored in the bits R1 to R6 of the register 304. Thus, as shown in I) to N) of Fig. 4, only the AND gates 306, 310 and 314 generate output pulses, and the AND gates 308, 312 and 316 do not transmit any pulses. The outputs of the AND gates 306, 308, 310, 312, 314 and 316 are each applied to the AND gate 320 via the OR gate 318, which receives the REF pulse as the other AND condition to generate a pulse. As a result, the pulses shown in O) of Fig. 4 are generated from the AND gate 320 and are applied to the interval pulse generating circuit 120 of Fig. 1.

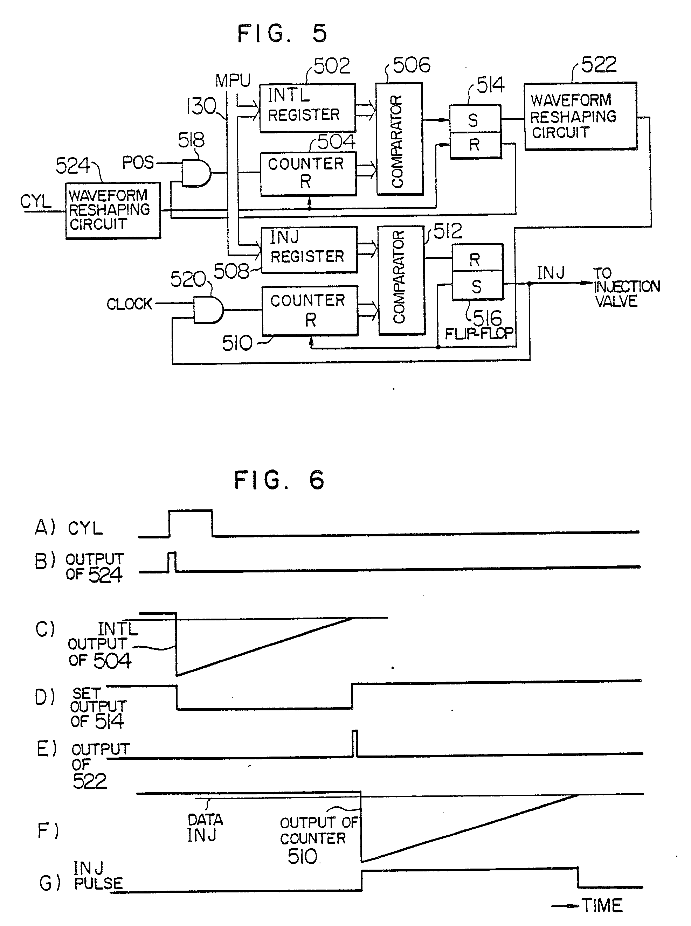

Fig. 5 is a detailed circuit diagram of the interval pulse generating circuit 120 and the injection pulse generating circuit 118 of Fig. 1, and Fig. 6 is a waveform diagram for explaining the operation of these circuits. When the CYL pulse shown in A) of Fig. 6 is applied to a waveform reshaping circuit 524, the pulse shown in (B) of Fig. 6 is generated, and thus a counter 504 and a flip-flop 514 are reset. When the flip-flop 514 is reset, an AND gate 518 comes into operation so that clock pulses POS are applied to the counter 504 which counts them up. The clock pulse POS is a pulse indicative for example of a unit rotational angle of 2° of the engine shaft, and it is sent from a crank angle sensor (not shown). The shift value INTL is applied to a register 502, and the output of the counter 504 is compared with the data INTL by a comparator 506. When the output of the counter 504 becomes equal to the data INTL or the output of the register 504 as shown in C) of Fig. 6, the flip-flop 514 is set as shown in D) of Fig. 6, and the pulse shown in E) of Fig. 6 is generated from a waveform reshaping circuit 522. On the other hand, the AND gate 518 is rendered inoperative, and the application of clock pulses POS to the counter 504 is stopped. This has the effect of preventing any erroneous operation due to overflowing of the counter 504.

The output of the waveform reshaping circuit 522 sets a flip-flop 516 thereby generating the INJ pulse shown in G) of Fig. 6 and also resets the counter 510 as shown in F) of Fig. 6. When the flip-flop 516 is set, an AND gate 520 comes into operation so that a clock pulse generated at intervals of a given time is applied to the counter 510 via the AND gate 520. The data INJ indicative of the injection pulse duration are stored in a register 508, and the output of the counter 510 is compared with the data INJ by a comparator 512. When the output of the counter 510 becomes equal to the data INJ or the output of the register 508, the flip-flop 516 is reset, and the pulse INJ is cut off. Also, the AND gate 520 comes out of operation, and the application of clocks to the counter 510 is stopped. This prevents overflowing of the counter 510. The pulses INJ are applied to the fuel metering valve 124 of the fuel injection pump 112.

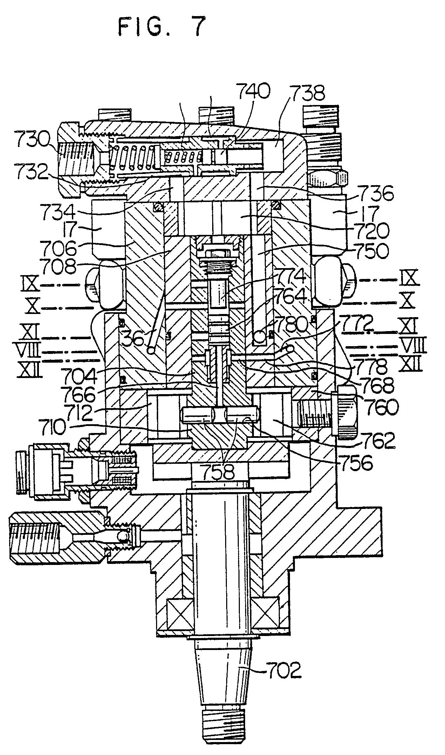

Fig. 7 is a vertical sectional view of the fuel injection pump 112 of Fig. 1. A rotary distributor 704 which is positioned centrally in the injection pump 112 and coupled to the engine shaft through a shaft 702, is rotatably disposed in a sleeve 708 which is firmly fitted and positioned in a cylindrical body 706. Disposed at the lower end of the rotary distributor 704 is a pressure pump comprising a rotor 710, a roller 712 and an annular cam 760. Also, a vane type supply pump 720 is disposed at the upper end of the rotary distributor 704.

The fuel is supplied from a fuel tank to an inlet port 730 in the upper part of the injection pump, and the fuel is supplied to the pump 720 through a passage 734 and a filter 732. The fuel from the pump 720 is supplied to a passage 750, and a part of the fuel is returned to a chamber 738 via a passage 736. When a piston 740 pressed by a spring 741 is urged against the spring 741 by the fuel in the chamber 738, a passage 742 is communicating with the chamber 738, and thus the fuel in the chamber 738 is returned to the fuel tank.

The rotor 710 is provided with a transverse hole 756, and a pair of plungers 758 are received within the transverse hole 756. When the rotary distributor 704 is rotated, the plungers 758 are moved through the roller 712 and a roller support 762 by the action of the annular cam 760 disposed in the lower part of the body 706. This compresses the fuel within the fuel passage formed centrally in the rotary distributor 704, and a shuttle 764 is urged upwardly.

A longitudinal passage 766 formed centrally in the rotary distributor 704 is communicating at its lower end with the transverse hole 756, and the shuttle 764 is slidably disposed in the longitudinal passage 766. The amount of movement of the shuttle 764 is regulated by the amount of fuel supplied to the passage 766 through passages 768, 770 and 772 and a pair of upper and lower stoppers 774.

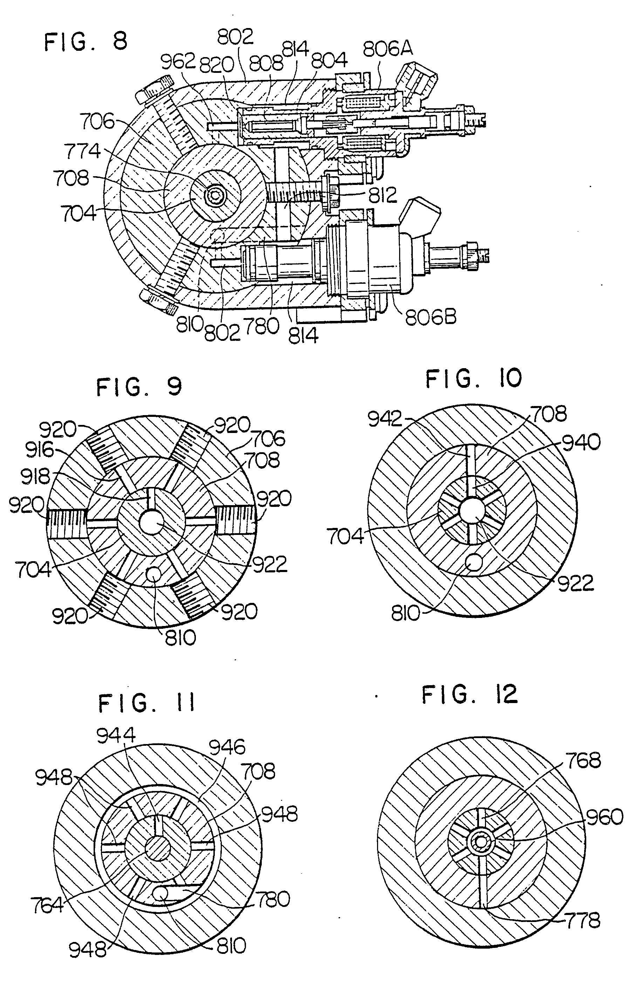

Fig. 8 is a sectional view taken along the line IX—IX of Fig. 7. The lower stopper 774 is disposed in the center hole of the rotary distributor 704, and the rotary distributor 704 is rotatable within the central hole of the sleeve 708 fixedly positioned in the body 706. The body 706 is enclosed by a case 802 and is provided with an electromagnetic valve 806A mounted at the right end of a valve hole 804. The valve comprises a valve stem 808, an outlet passage 810 shown by the broken line, a transverse hole 780 communicating with the outlet passage 810, and a transverse hole 812 communicating a suction space 814 with the passage 780. The orifice 820 opposing the valve stem 808 communicates with an injection communication port.

The fuel supplied from the electromagnetic valve 806A is pressurized by the shuttle 764 of Fig. 7 and is supplied through distribution outlets to the corresponding cylinders. The timing of the pressurization is determined by the amount of fuel supplied from an electromagnetic valve 806B.

Figs. 9 to 12 are cross-sectional views of the fuel injection pump, and Fig. 9 is a sectional view along the line X—X of Fig. 7 showing fuel delivery passages. When the rotary distributor 704 is rotated, a delivery passage 918 is selectively aligned with a plurality of delivery ports 916 formed in the sleeve 708, and the delivery ports 916 are each connected with the mounting hole of a pressure valve 920 so that the pressurized fuel in the working chamber 922 is distributed and supplied to the six cylinders of the Diesel engine. In other words, fuel is supplied to each of the six cylinders for every rotation of the rotary distributor 704.

Fig. 10 is a sectional view taken along the line XI—XI of Fig. 7 showing fuel inlet passages. This portion of the rotary distributor 704 is provided with six inlet passages 940 which are arranged at intervals of an equal angle and communicate with the working chamber 922. The sleeve 708 is provided with a single inlet port 942. The inlet port 942 is arranged so as to communicate with the inlet passages 940 at least when the delivery passage 918 (Fig. 9) is not aligning with the delivery ports 916 (Fig. 9).

Fig. 11 is a sectional view taken along the line VIII—VIII of Fig. 7 showing the shuttle 764 in section and a fuel escape passage 944. The outer diameter of the sleeve 708 is reduced to form a fuel sump groove 946, and a plurality of escape ports 948 are arranged at intervals of an equal angle to communicate with the fuel sump groove 946. In other words, the escape passage 944 communicates with each of the six escape ports 948 for every rotation of the rotary distributor 704 so that the fuel is gathered in the sump groove 946, and any extra fuel is discharged through the transverse hole 780 and the outlet passage 810.

Fig. 12 is a sectional view taken along the line XII—XII of Fig. 7 showing a stopper 960 in section. This portion of the rotary distributor 704 is provided with six injection timing adjusting passages 768 arranged at intervals of an equal angle, and these passages 768 are successively communicated with the timing adjusting passage 778.

With the fuel injection pump constructed as described above, when the shuttle 764 comes near to the delivery passage 918, the inlet port 942 is aligned with one of the inlet passages 940. As a result, the electromagnetic valve 806A is operated so that the valve stem 808 is opened, and the fuel in the suction space 814 reaches the delivery port 916 through the valve hole 804, the orifice 820 and an injection communication port 962 thereby delivering the injection fuel to the working chamber 922 on the side of the delivery passage 918. The fuel delivered into the working chamber 922 moves the shuttle 764 toward the transverse hole 780, and thus the fuel is supplied to each of the engine cylinders from the working chamber 922 through the pressure valves 788 of Fig. 7.

The shuttle 764 is moved so long as the escape passage 786 is covered by the rear side of the shuttle 764, and when the escape passage 786 is not covered, the shuttle 764 is stopped moving any further, and the fuel remaining in the pressure pump chamber 766 flows to the outlet passage 810 through the escape passage 786 and the escape ports 948. When the rotary distributor 704 is rotating, the above-mentioned cycle is repeated automatically.

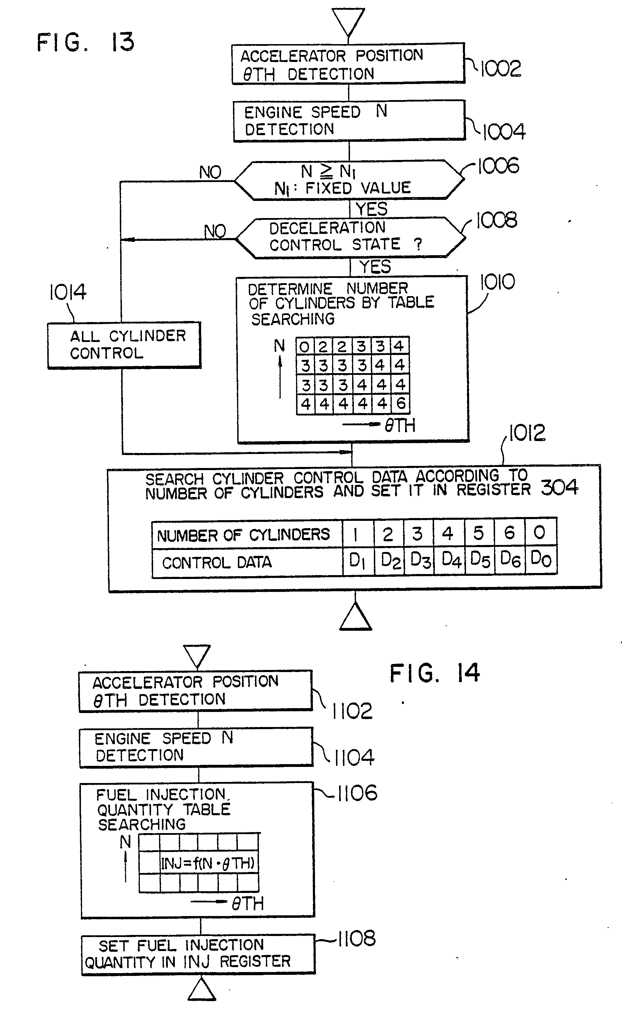

Fig. 13 is a flow chart for computing the number of cylinders control data which are set in the register 304 of Fig. 3. In steps 1002 and 1004 the accelerator position $\theta$TH and an engine speed N respectively are detected as engine condition indicative parameters. In step 1006 it is determined whether the engine speed N is greater than a given value $N_1$ so that if it is, step 1006 transfers to a step 1008 for controlling the number of cylinders. In step 1008 it is determined whether there is a deceleration condition so that it transfers to a step 1010 only when there exists deceleration. When the conditions of steps 1006 and 1008 are not satisfied, a transfer is made to a step 1014 for effecting a normal operation control by which all the cylinders are operated. In step 1014 the number of the cylinders of the engine, i.e., the number 6 in this embodiment is selected and then processing continues with step 1012. In step 1010, table comprising the numbers of operative cylinders as functions of the engine parameters N and $\theta$TH is searched, and the number of operative cylinders corresponding to the engine operating condition is determined. The table is stored in the ROM 102. If in step 1010 the number 0 is searched, it means that the fuel supply to all the cylinders is cut off. If the number 4 is searched, it means that the fuel is supplied only to four of the six cylinders. If the number 6 is searched, it means ordinary control according to which fuel is supplied to all the cylinders. Thus, in accordance with the searched number of cylinders control data indicating which of the six cylinders are to be operated are determined by table searching, which are set in the register 304. When the number of cylinders is 0, the corresponding control data is 000000, and the control data corresponding to the numbers 3 and 6 are 101010 and 111111 respectively.

Fig. 14 is a flow chart for computing data INJ which are set in the register 508. In steps 1102 and 1104, the accelerator position $\theta$TH and the engine speed N, respectively are determined as engine parameters, and in step 1106 the desired fuel injection quantity INJ is determined in accordance with the detected parameters N and $\theta$TH. The fuel injection quantity INJ is represented as a function of the parameters N and $\theta$TH, and these

fuel injection quantities INJ are stored in the form of a table in the ROM 102. The desired fuel injection quantity INJ is searched in accordance with the table. The searched fuel injection quantity INJ is set in the INJ register 508 in step 1108. Thus, a pulse corresponding to the computed quantity INJ is supplied to the fuel metering valve 124, and the fuel is supplied to the corresponding cylinders through the fuel injection pump 112.

The broken line circuits in Fig. 1 show the principal part of another embodiment of the invention. This embodiment is so constructed that in Fig. 1 the output of the crank angle sensor 110 is applied directly to the interval pulse generating circuit 120 as shown by the broken line, and the output of the injection pulse generating circuit 118 is applied to the fuel metering valve 124 not directly but through the AND gate 140 as shown by the broken lines. In this case, one input of the AND gate 140 receives the INJ pulses as mentioned previously, and the other input receives the output of the cylinder control circuit 122. In this embodiment, all the REF pulses are applied to the interval pulse generating circuit 120, and thus the injection pulse generating circuit 118 generates the INJ pulse corresponding to all the REF pulses. Of these INJ pulses, only those which are enabled by the cylinder control circuit 122 are applied to the fuel metering valve 124 via the AND gate 140. The cylinder control circuit 122 is the one shown by the dotted line 300 in Fig. 3, and the output of the OR gate 318 (Fig. 3) is applied to the AND gate 140. In other words, the pulses shown in I) to N) of Fig. 4 are applied to the AND gate 140. In this embodiment, the OR gate 318 generates an output only in response to each of the REF pulses 1, 3 and 5 shown in I), K) and M) of Fig. 4, and only the INJ pulses corresponding to the Nos. 1, 3 and 5 cylinders are applied to the fuel metering valve 124 through the AND gate 140. Consequently, exactly the same effects as with the first embodiment are obtained.

In accordance with the apparatus of the present invention for controlling the number of operative cylinders of a Diesel engine, there is a great advantage that the fuel metering pump can be operated positively, and the cylinders into which the fuel is to be injected are selected automatically in accordance with the engine operating conditions, thereby reducing the fuel consumption.

**Claims**

1. An apparatus for controlling the number of operative cylinders of Diesel engines comprising:

a control circuit (100, 102, 104, 106) responsive to a plurality of engine parameters and determining the fuel supply quantity;

engine rotational speed detecting means (110, 116) generating rotation synchronous pulses;

a fuel control pulse generating circuit (118) responsive to the engine speed (N) detected by the engine rotational speed detecting means (110, 116) and generating fuel control pulses;

fuel injection means (112) comprising a fuel metering valve (124) responsive to the fuel control pulses of the fuel control pulse generating circuit (118) and distributing the fuel to the cylinders;

means for detecting deceleration;

means (102) providing an information corresponding to the number of operative cylinders as a function of at least the engine speed (N), and

a cylinder control circuit (122; 300) determining the number of operative cylinders in accordance with the information issued from the means (102) and controlling when deceleration has been detected the number of operative cylinders in accordance with the engine speed (N) by accordingly controlling the fuel metering valve (124),

characterized in that

the engine rotational speed detecting means (110, 116) include a crank angle sensor (110),

the fuel injection means include a fuel injection pump (112) for compressing and distributing the fuel metered by the fuel metering valve (124) to the cylinders,

an accelerator position sensor (108) is provided which delivers output signals corresponding to the power requested by the driver,

the means (102) are memory means storing the number of operative cylinders as a function of the engine speed (N) and the accelerator position $(u_{TH})$ in the form of a map, and

the cylinder control circuit (122; 300) controls the fuel metering valve (124) on the basis of the map stored in the memory means (102) during deceleration, whereas all the cylinders are operated when no deceleration has been detected (Figs. 1, 13).

2. The apparatus according to claim 1, characterized in that the control circuit (100, 102, 104, 106) is a microcomputer system comprising:

a microcomputer (MPU) (100),

a random access memory (RAM) (104),

a read-only memory (ROM) (102) as memory means storing the map of the number of operative cylinders,

an engine speed detecting circuit (116) detecting the engine speed (N) on the basis of the output signal of the crank angle sensor (110), and an injection pulse generating circuit (118) (Fig. 1).

3. The apparatus according to claim 1 or 2, characterized in that the microcomputer system (100, 102, 104, 106, 116) comprises the cylinder control circuit (122) which is controlled by the MPU (100) (Fig. 1).

4. The apparatus according to claim 1 or 2, characterized in that:

the cylinder control circuit (300) is provided independently of the control circuit (100, 102, 104, 106), and

the output of the injection pulse generating circuit (118) is applied to the fuel metering valve (124) through an AND gate (140), the other input of which receives the output of the cylinder control circuit (300) (Fig. 1).

5. The apparatus according to one of claims 1 to 3, characterized in that the cylinder control circuit (122) comprises an AND gate (320) receiving at one of its inputs reference pulses (REF) generated at intervals of equal crank angles for each cylinder (A, Fig. 2), and at its other input the output of an OR gate (318) supplied with the output pulses from AND gates (306, 308, 310, 312, 314, 316) which are supplied with output pulses ($Q_1$ to $Q_6$) (C to H, Fig. 4) from a ring counter (302) receiving the output of the crank angle sensor and counting the number of cylinders and with cylinder control data ($R_1$ to $R_6$) from the MPU (100) (Fig. 3).

**Patentansprüche**

1. Einrichtung zur Steuerung der Anzahl arbeitender Zylinder eines Dieselmotors, umfassend

einen auf mehrere Motorparameter ansprechenden Steuerkreis (100, 102, 104, 106), der die Kraftstoffzufuhrmenge bestimmt;

Motordrehzahlaufnehmer (110, 116), die umdrehungssynchrone Impulse erzeugen;

einen Kraftstoffeinstellimpulsgeber (118), der auf die von den Motordrehzahlaufnehmern (110, 116) erfaßte Motordrehzahl (N) anspricht und Kraftstoffeinstellimpulse erzeugt;

eine Einspritzvorrichtung (112) mit einem Kraftstoffzumeßventil (124), das auf die Kraftstoffeinstellimpulse des Kraftstoffeinstellimpulsgebers (118) anspricht und den Kraftstoff an die Zylinder verteilt;

Mittel zur Verzögerungserkennung;

eine Einheit (102), die eine der Anzahl arbeitender Zylinder entsprechende Information als Funktion wenigstens der Motordrehzahl (N) liefert; und

einen Zylindersteuerkreis (122; 300), der aufgrund der von der Einheit (102) gelieferten Information die Anzahl arbeitender Zylinder bestimmt und nach Erfassen einer Verzögerung die Anzahl arbeitender Zylinder aufgrund der Motordrehzahl (N) durch entsprechende Einstellung des Kraftstoffzumeßventils (124) steuert;

dadurch gekennzeichnet, daß

die Motordrehzahlaufnehmer (110, 116) einen Kurbelwinkelsensor (110) aufweisen;

die Einspritzvorrichtung eine Einspritzpumpe (112) zum Verdichten und Verteilen des vom Kraftstoffzumeßventil (124) zugemessenen Kraftstoffs an die Zylinder aufweist;

ein Gaspedallagesensor (108) vorgesehen ist, der der vom Fahrer verlangten Leistung entsprechende Ausgangssignale liefert;

die Einheit (102) ein Speicher ist, in dem die Anzahl arbeitender Zylinder als Funktion der Motordrehzahl (N) und der Gaspedallage ($u_{TH}$) in Form einer Map gespeichert ist; und

der Zylindersteuerkreis (122; 300) das Kraftstoffzumeßventil (124) während einer Verzögerung auf der Basis der im Speicher (102) gespeicherten Map steuert, wogegen bei Nichterfassen einer Verzögerung alle Zylinder arbeiten (Fig. 1, 13).

2. Einrichtung nach Anspruch 1, dadurch gekennzeichnet, daß der Steuerkreis (100, 102, 104, 106) ein Mikrocomputersystem ist, umfassend

einen Mikrocomputer (MPU) (100),

einen RAM (104),

einen ROM (102) als Speicher, in dem die Map der Anzahl arbeitender Zylinder gespeichert ist,

einen Motordrehzahlaufnehmer (116), der die Motordrehzahl (N) aufgrund des Ausgangssignals des Kurbelwinkelsensors (110) erfaßt; und

einen Einspritzimpulsgeber (118) (Fig. 1).

3. Einrichtung nach Anspruch 1 oder 2, dadurch gekennzeichnet, daß das Mikrocomputersystem (100, 102, 104, 106, 116) den vom Mikroprozessor (MPU) (100) gesteuerten Zylindersteuerkreis (122) umfaßt (Fig. 1).

4. Einrichtung nach Anspruch 1 oder 2, dadurch gekennzeichnet, daß

der Zylindersteuerkreis (300) unabhängig vom Steuerkreis (100, 102, 104, 106) vorgesehen ist, und

der Ausgangsimpuls des Einspritzimpulsgebers (118) dem Kraftstoffzumeßventil (124) über ein UND-Glied (140) zugeführt wird, dessen zweiter Eingang das Ausgangssignal des Zylindersteuerkreises (300) empfängt (Fig. 1).

5. Einrichtung nach einem der Ansprüche 1 bis 3, dadurch gekennzeichnet, daß der Zylindersteuerkreis (122) ein UND-Glied (320) umfaßt, das an einem seiner Eingänge Bezugsimpulse (REF) empfängt, die in Intervallen gleicher Kurbelwinkel für jeden Zylinder (A, Fig. 2) erzeugt werden, und das an seinem zweiten Eingang das Ausgangssignal eines ODER-Glieds (318) empfängt, dem die Ausgangsimpulse von UND-Gliedern (306, 308, 310, 312, 314, 316) zugeführt werden, denen Ausgangsimpulse ($Q_1$ bis $Q_6$ (C bis H, Fig. 4) eines Ringzählers (302), der das Ausgangssignal des Kurbelwinkelsensors empfängt und die Anzahl Zylinder zählt, sowie Zylindersteuerdaten ($R_1$ bis $R_6$) des Mikroprozessors (MPU) (100) zugeführt werden (Fig. 3).

**Revendications**

1. Dispositif de commande du nombre de cylindres en fonctionnement de moteurs Diesel comportant

un circuit de commande (100, 102, 104, 106) sensible à une pluralité de paramètres du moteur et déterminant la quantité d'alimentation en carburant;

des moyens de détection de vitesse de rotation du moteur (110, 116) générant des impulsions synchrones de la rotation;

un circuit de génération d'impulsions de commande de carburant (118) sensible à la vitesse du moteur (N) détectée par les moyens de détection de vitesse de rotation du moteur (110, 116) et générant des impulsions de commande de carburant;

des moyens d'injection de carburant (112) comportant une valve de mesure de carburant (124) sensible aux impulsions de commande de carburant du circuit de génération d'impulsions de commande de carburant (118) et distribuant le carburant aux cylindres;

des moyens pour détecter un ralentissement;

des moyens (102) délivrant une information correspondant au nombre de cylindres en fonctionnement en fonction d'au moins la vitesse du moteur (N), et

un circuit de commande de cylindres (122; 300) déterminant le nombre de cylindres en fonctionnement conformément à l'information provenant des moyens (102) et commandant, lorsqu'un ralentissement a été détecté, le nombre de cylindres en fonctionnement, conformément à la vitesse du moteur (N), en commandant en conséquence la valve de mesure de carburant (124),

caractérisé en ce que

les moyens de détection de la vitesse de rotation du moteur (110, 116) comprennent un détecteur (110) d'angle de vilebrequin,

les moyens d'injection de carburant comprennent une pompe d'injection de carburant (112) pour comprimer et distribuer le carburant mesuré par la valve de mesure de carburant (124) aux cylindres,

un capteur (108) de position d'accélérateur est prévu qui délivre des signaux de sortie correspondants à la puissance demandée par le conducteur,

les moyens (102) sont des moyens de mémoire conservant le nombre de cylindres en fonctionnement en fonction de la vitesse du moteur (N) et de la position d'accélérateur ($u_{TH}$) sous la forme d'une carte, et

le circuit de commande de cylindres (122; 300) commande la valve de mesure de carburant (124) sur la base de la carte conservée dans les moyens de mémoire (102) durant un ralentissement, tandis que tous les cylindres sont en fonctionnement lorsqu'aucun ralentissement n'a été détecté (Figures 1, 13).

2. Dispositif selon la revendication 1, caractérisé en ce que le circuit de commande (100, 102, 104, 106) est un système à microcalculateur comportant:

un microcalculateur (MPU) (100),
une mémoire à accès sélectif (RAM) (104),

une mémoire figée (ROM) (102) en tant que moyens de mémoire conservant la carte du nombre des cylindres en fonctionnement,

un circuit de détection de la vitesse du moteur (116) détectant la vitesse du moteur (N) à partir du signal de sortie du capteur (110) d'angle de vilebrequin, et

un circuit de génération d'impulsions d'injection (118) (Figure 1).

3. Dispositif selon la revendication 1 ou 2, caractérisé en ce que le système à microcalculateur (100, 102, 104, 106, 116) comporte le circuit de commande de cylindres (122) qui est commandé par le MPU (100) (Figure 1).

4. Dispositif selon la revendication 1 ou 2, caractérisé en ce que

ls circuit de commande de cylindres (300) est prévu indépendamment du circuit de commande (100, 102, 104, 106), et

le signal de sortie du circuit de génération d'impulsions d'injection (118) est appliqué à la valve de mesure de carburant (124) par l'intermédiaire d'une porte ET (140), dont l'autre entrée reçoit le signal de sortie du circuit de commande de cylindres (300) (Figure 1).

5. Dispositif selon l'une quelconque des revendications 1 à 3, caractérisé en ce que le circuit de commande de cylindres (122) comporte une porte ET (320) recevant sur l'une de ses entrées des impulsions de référence (REF) générées à des intervalles d'angles de vilebrequin égaux pour chaque cylindre (A, Figure 2), et à son autre entrée le signal de sortie d'une porte OU (319) recevant les impulsions de sortie de portes ET (306, 308, 310, 312, 314, 316) qui sont alimentées par des impulsions de sortie ($Q_1$ à $Q_6$) (C à H, Figure 4) provenant d'un compteur en anneau (302) recevant le signal de sortie du capteur d'angle de vilebrequin et comptant le nombre de cylindres et par des données de commande de cylindre ($R_1$ à $R_6$) provenant du MPU (100) (Figure 3).

FIG. 1

Figure 1 is a block diagram of a fuel injection control system including: RAM (104), MPU (100), ROM (102), I/O (106), connected via bus (130). The I/O includes A/D converter (114) receiving VA from ACCELERATOR POSITION SENSOR (108), ENGINE SPEED DETECTING CIRCUIT (116), CYLINDER CONTROL CIRCUIT (122), flip-flops INJ (118) and INJ (120) with INT signal. Signals INJ and CYL feed an AND gate (140, CYL). INJECTION PUMP (112, Fuel) includes FUEL INJECTION METERING VALVE (124), CRANK ANGLE SENSOR (110), and CYLINDER CONTROL CIRCUIT (300 / 122) with REF signals.

# FIG. 2

A) REF

B) T1 T2 T3 T4 T5 T6

C) CYL

D) INT   INTL   INTL   INTL   INTL

E) INJ

# FIG. 3

FIG. 4

A) REF

B) RESET

C) Q1

D) Q2

E) Q3

F) Q4

G) Q5

H) Q6

I) AND 306

J) AND 308

K) AND 310

L) AND 312

M) AND 314

N) AND 316

O) AND 320
   CYL

→ TIME

# FIG. 5

# FIG. 6

A) CYL

B) OUTPUT OF 524

C) INTL OUTPUT OF 504

D) SET OUTPUT OF 514

E) OUTPUT OF 522

F) DATA INJ    OUTPUT OF COUNTER 510.

G) INJ PULSE

→ TIME

## FIG.  7

FIG. 8

FIG. 9

FIG. 10

FIG. 11

FIG. 12

FIG. 13

**1002** — ACCELERATOR POSITION θTH DETECTION

**1004** — ENGINE SPEED N DETECTION

**1006** — N ≧ N₁  N₁ : FIXED VALUE — NO / YES

**1008** — DECELERATION CONTROL STATE ? — NO / YES

**1014** — ALL CYLINDER CONTROL

**1010** — DETERMINE NUMBER OF CYLINDERS BY TABLE SEARCHING

| N | | | | | |
|---|---|---|---|---|---|
| 0 | 2 | 2 | 3 | 3 | 4 |
| 3 | 3 | 3 | 3 | 4 | 4 |
| 3 | 3 | 3 | 4 | 4 | 4 |
| 4 | 4 | 4 | 4 | 4 | 6 |

→ θTH

**1012** — SEARCH CYLINDER CONTROL DATA ACCORDING TO NUMBER OF CYLINDERS AND SET IT IN REGISTER 304

| NUMBER OF CYLINDERS | 1 | 2 | 3 | 4 | 5 | 6 | 0 |
|---|---|---|---|---|---|---|---|
| CONTROL DATA | $D_1$ | $D_2$ | $D_3$ | $D_4$ | $D_5$ | $D_6$ | $D_0$ |

FIG. 14

**1102** — ACCELERATOR POSITION θTH DETECTION

**1104** — ENGINE SPEED N DETECTION

**1106** — FUEL INJECTION QUANTITY TABLE SEARCHING

N

$INJ = f(N \cdot \theta TH)$

→ θTH

**1108** — SET FUEL INJECTION QUANTITY IN INJ REGISTER

7